(19) Europäisches Patentamt
European Patent Office
Office européen des brevets

(11) Publication number: **0 168 721**
**A1**

(12) **EUROPEAN PATENT APPLICATION**

(21) Application number: **85108301.4**

(22) Date of filing: **04.07.85**

(51) Int. Cl.[4]: **C 07 F 9/141**, C 07 F 9/15, C 08 K 5/52, C 08 L 27/06, C 08 L 23/02

(30) Priority: **04.07.84 JP 138775/84**

(43) Date of publication of application: **22.01.86**
**Bulletin 86/4**

(84) Designated Contracting States: **BE CH DE FR GB LI NL**

(71) Applicant: **ADEKA ARGUS CHEMICAL CO., Ltd.,**
**5-2-13 Shirahata, Urawa City, Saitama Prefecture (JP)**

(72) Inventor: **Sasaki, Kazuo, 1-3-33 Akatsukidai, Yokkaichi Mie (JP)**
Inventor: **Nishimura, Atsushi, 2750-49 Washinomiya, Washinomiya Saitama (JP)**
Inventor: **Nishikawa, Kazunori, 1-256 Shinmatsudominami, Matsudo Saitama (JP)**
Inventor: **Takeuchi, Takashi, 418-1 Shitakebukuro, Urawa Saitama (JP)**

(74) Representative: **Weinhold, Peter, Dr. et al, Patentanwälte Dr. V. Schmied-Kowarzik Dipl.-Ing. G. Dannenberg Dr. P. Weinhold Dr. D. Gudel Dipl.-Ing. S. Schubert Dr. P. Barz Siegfriedstrasse 8, D-8000 München 40 (DE)**

(54) **Organic phosphite esters having improved resistance to hydrolysis in the presence of water.**

(57) Organic phosphite esters having improved hydrolytic stability are provided, comprising an amount of hexamethylene tetramine sufficient to improve resistance to hydrolysis in the presence of water.



ACTORUM AG

Organic phosphite esters are effective stabilizers for synthetic polymers such as polyethylene, polypropylene, and polyvinyl chloride, to inhibit degradation due to heat and light. However, phosphite esters are subject to hydrolysis in the presence of moisture, reducing their effectiveness as stabilizers. Various additives have been proposed, to improve the resistance of phosphite esters to such hydrolysis.

Combination of the solid phosphite ester with low molecular weight polyolefin or higher aliphatic ketone is proposed in Japanese Kokai 51-37136 (1976).

Hodan et al U.S patent No. 3,553,298, patented January 5, 1971, found that when a nitrogen-containing compound is mixed with a phosphite ester the phosphite ester has improved hydrolytic stability. When such a mixture is admixed with an epoxide resin, surprising improvements in the stability of the epoxide resin composition result.

The nitrogen-containing compounds disclosed by Hodan et al., which stabilize phosphite esters against hydrolysis and which do not precipitate from a stabilized phosphite ester composition thereof, are selected from the group consisting of (1) a heterocyclic alkyl such as typically piperidine, pyrrolidine, piperazine, diketopiperazine, picoline, anthraquinoline, N-methyl

pyrrolidine, thiazole, oxazolidine, isooxazolidine, and oxdiazole, (2) an aromatic heterocyclic such as typically oxazoline, isoxazoline, thiotriazole, pyridine, picoline, pyrrole, and quinoline (3) a dialkanol amine such as typically diisopropanol amine, diethanol amine, tetraethanol ethylene diamine, and tetraisopropanol ethylene diamine, (4) a trialkanol amine such as typically triisopropanol amine, and triethanol amine, (5) ammonia, and (6) an alkyl amine such as triethyl amine, dimethyl amine, and tripropyl amine, provided that heterocyclic atoms of said heterocyclic alkyl and of said aromatic heterocyclic typically include nitrogen, oxygen, and sulfur, and provided that at least one nitrogen atom is included. The substituted forms of each of the above members are also within the scope of the invention. Typical substituents are alkyl, aryl, various halogen substituents, oxygen, sulfur-containing, and the like, provided that the particular substituent does not adversely effect the properties of the stabilized phosphite of this invention. Typical substituents include methyl, ethyl, propyl, decyl, methoxy, propoxy, chlorine, oxy, hydroxy, carboxy, sulfoxy, nitroxy, phenyl, naphthyl, and the like. The length of alkyl or alkanol chain, for example, is important solely in that the short-chain alkyls or alkanols of about 1 to about 6 carbons give the preferred solubility of the stabilizer of this invention whereby the stabilizer does not precipitate from the stabilized phosphite ester solution. Although

methyl and methanol amines are otherwise satisfactory, these compounds are not desirable because of their high volatility. It is noteworthy that the specificity of the non-precipitating stabilizers (i.e., those which are highly effective and which do not precipitate from the stabilized phosphite ester solution) is further emphasized by the fact that monoethanol amine is much less effective as a stabilizer as compared to other compounds of this invention, although the monoethanol amine does have stabilizing action.

Numerous examples of curing agents which may be used with the compositions of this invention and which are known to those skilled in the art for curing epoxide resins are for example various amines such as aliphatic and aromatic primary, secondary and tertiary amines, e.g. diethylamine, mono-, di- and tri-butylamines, octyl amine, dodecyl amine, cyclohexylamine, benzylamine, benzyl dimethyl amine, piperidine, piperazine, etc.; polyamines, e.g. m-phenylene diamine, p-phenylene diamine, 4,4'-methylenedianiline, m-xylenediamine, 4,4'-diaminodiphenyl sulfone, 4,4'-methylene dianiline-diaminodiphenyl sulfone blend, m-phenylene diamine-diaminodiphenyl sulfone blends, ethylene diamine, N,N-diethylene diamine, diethylene triamine, triethylene tetramine, tetraethylenepentamine, pentaethylene diamine, etc.; oxyamines such as ethanolamine, butanolamine, diethanolamine, triethanolamine, etc.; hydroxy-alkylated polyamines, such as 2-aminoethyl-ethanolamine, N-hydroxyethyl-1,2-diamino propane, 1,3-diaminopropanol, N-hydroxypropyl -m-phenylene diamine, N-(2-hydroxypropyl) ethylene diamine, N,N'-bis (hydroxyethyl) triethylene triamine, N-hydroxyethyl diethylene triamine, etc.; phenolic tertiary amines, such as dimethylaminomethylphenol, tri(dimethylaminomethyl) phenol, etc.; the salts of phenolic tertiary amines, such as the 2-ethyl hexanoic acid salt of tris(methylaminomethyl) phenol, etc., aliphatic amine-adducts, such as diethylene triamine, 4,4'-isopropylene diphenol adducts, such as diethylene triamine/acrylonitrile adduct, acrylonitrile/tetraethylene pentamine adduct, etc.

Japanese Kokai 52-225 (1977) proposes stabilization of organic triphosphites by incorporating metal carboxylates.

J.F. York U.S. patent No. 4,116,926, patented September 26, 1978, discloses the stabilization of dialkylpentaerythritol diphosphite or polyalkyl-bisphenol A-polyphosphite where the alkyl groups each contain 8-20 carbon atoms with a minor proportion of triisopropanolamine.

The dialkylpentaerythritol diphosphites above are disclosed in U.S. patent No. 2,961,454 where it is taught that such compounds may be prepared conveniently by reacting tri-2-chloropropyl phosphite with pentaerythritol to form the bis (2-chloropropoxy) spiro 1,3,2-phosphorinane

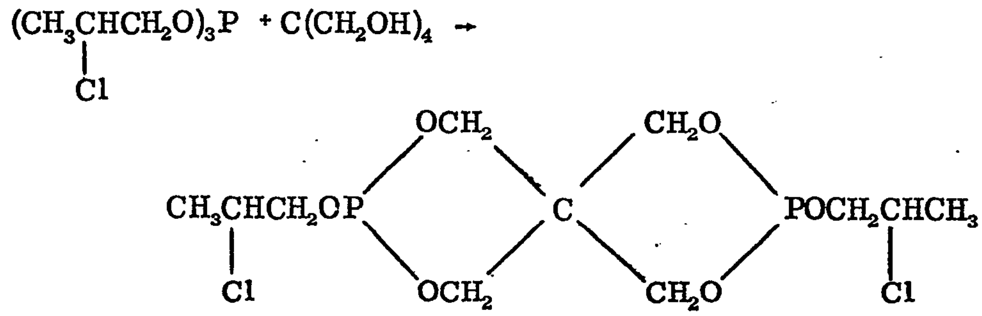

which then is reacted in turn with stearyl alcohol, for example, to form the desired distearyl pentaerythritol diphosphite.

Another method of preparation of these diphosphites is shown in U.S. patent No. 3,205,250; in that method triphenyl phosphite is used as the starting material instead of the tris-2-chloropropyl phosphite; this in turn requires the use of an alkaline catalyst.

The polyalkyl bisphenol-A polyphosphites are disclosed in U.S. patent Nos. 3,356,770 (Larrison) and 3,662,032 (Kauder et al). They are prepared by the reaction of triphenyl phosphite, bisphenol-A and an alcohol of from about 8 to about 20 carbon atoms.

Alternatively, the triphenyl phosphite and bisphenol-A may first be reacted to give an intermediate product such as that described in U.S. patent No. 3,484,506 (Baranauckas et al) and then this intermediate product reacted with the alcohol to give the final desired product.

Still another method of preparation involves the use of a trialkyl phosphite in place of the triphenyl phosphite and alcohol.

Thus, the trialkyl phosphite is reacted with bisphenol-A in such proportions as to produce the desired polyalkyl bisphenol-A polyphosphite.

In all of these reactions the phenolic group of the bisphenol-A reacts with a phenyl or alkyl group of the triphenyl phosphite or trialkyl phosphite.

Japanese Kokai 55-14572 (1980) corresponding to British patent application No. 2046273A discloses a composition comprising bis (2,4-di-t-butylphenyl) pentaerythritol diphosphite and a minor proportion of triisopropanol amine having improved hydrolytic stability.

However, triisopropanolamine gives rise to undesired discoloration of the polymer, and none of the proposed additives is fully satisfactory.

In accordance with the present invention, it has been found that hexamethylene tetramine is remarkably effective to improve resistance of organic phosphite esters to hydrolysis in the presence of water.

Hexamethylene tetramine has the formula:

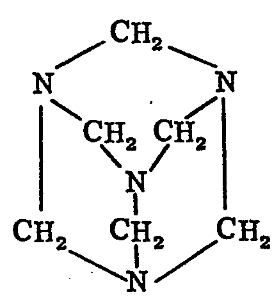

The compound is a cyclic tertiary hydrocarbon polyamine, solid at up to 200°C, above which temperature it sublimes but does not melt, and soluble in most liquid organic phosphite esters.

Hexamethylene tetramine is effective to improve the resistance to hydrolysis by water of organic phosphite esters as a class.

Phosphite esters have the structure

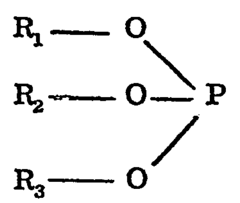

I

wherein $R_1$, $R_2$ and $R_3$ are organic hydrocarbon radicals, which may be substituted with one or more halogen, hydroxy or oxy ether groups, and have from one to about thirty carbon atoms, including alkyl, alkenyl, phenyl, cycloalkyl, cycloalkenyl, phenylalkyl, haloalkyl, haloalkenyl, halophenyl, halocycloalkyl, halophenylalkyl, hydroxy alkyl, hydroxy phenyl, hydroxycycloalkyl, alkoxy, phenoxy, and cycloalkoxy.

Exemplary $R_1$, $R_2$ and $R_3$ include phenyl, tolyl, ethylphenyl, nonylphenyl, decylphenyl, 2,4-dibutylphenyl, 2-methyl-3-ethylphenyl, benzyl, phenylethyl, phenylpropyl, phenylheptyl, methyl, ethyl, isopropyl, butyl, isoamyl, hexyl, heptyl, 2-ethylhexyl, nonyl, isodecyl, dodecyl, allyl, propenyl, butenyl, pentenyl, cyclopentyl, cyclohexyl, cycloheptyl, cyclohexenyl, and cycloheptenyl.

A particularly preferred class of phosphite esters are the pentaerythritol esters having the formula:

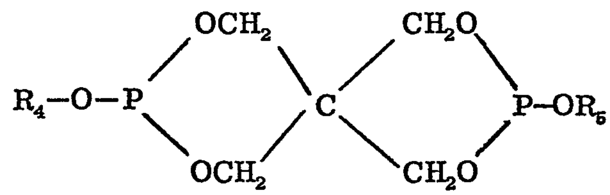

wherein $R_4$ and $R_4$ are organic hydrocarbon radicals, which may be substituted with one or more halogen, hydroxy or oxy ether groups, and have from one to about thirty carbon atoms, including alkyl, alkenyl, phenyl, cycloalkyl, cycloalkenyl, phenylalkyl, haloalkyl, haloalkenyl, halophenyl, halocycloalkyl, halophenylalkyl, hydroxy alkyl, hydroxy phenyl, hydroxy cycloalkyl, alkoxy, phenoxy, and cycloalkoxy.

Exemplary $R_4$ and $R_5$ include phenyl, tolyl, ethylphenyl, nonylphenyl, decylphenyl, 2,4-dibutylphenyl, 2-methyl-3-ethylphenyl, benzyl, phenylethyl, phenylpropyl, phenylheptyl, methyl, ethyl, isopropyl, butyl, isoamyl, hexyl, heptyl, 2-ethylhexyl, nonyl, isodecyl, dodecyl, allyl, propenyl, butenyl, pentenyl, cyclopentyl, cyclohexyl, cycloheptyl, cyclohexenyl, and cycloheptenyl.

Exemplary organic phosphites include triphenyl phosphite, diphenyl decyl phosphite, tris(nonylphenyl) phosphite, tridecyl phosphite, tris(2-ethylhexyl) phosphite, tributyl phosphite, tris-(dinonylphenyl) phosphite, trilauryl trithiophosphite, trilauryl phosphite, bis(neopentylglycol) 1,4-cyclohexanedimethyl diphosphite, distearyl pentaerythritol diphosphite, diisodecyl pentaerythritol diphosphite, tetra(tridecyl) 1,1,3-tris(2'-methyl-4'-hydroxy-5'-t-butylphenyl) butane diphosphite, tetra ($C_{12-15}$ mixed alkyl)

4,4'-isopropylidene diphenol diphosphite, tris (4-hydroxy-2,5-di-t-butylphenyl) phosphite, tris(4-hydroxy-3,5-di-t-butylphenyl) phosphite, diphenyl 2-ethylhexyl phosphite, hydrogenated 4,4'-isopropylidenediphenol polyphosphite, bis(octylphenyl) bis (4,4'-n-butylidenebis(2-t-butyl-5-methylphenol)) 1,6-hexanediol diphosphite, phenyl 4,4'-isopropylidenediphenol pentaerythritol diphosphite, phenyl diisodecyl phosphite, tetra-(tridecyl) 4,4'-n-butylidenebis(2-t-butyl-5-methyl phenol) diphosphite, tris (2,4-di-t-butylphenyl phosphite, tristearyl phosphite, octyl diphenyl phosphite, diphenyl (tridecyl) phosphite, phenyl di(tridecyl) phosphite, tris(2-cyclohexylphenyl) phosphite, di(tridecyl) di(2-cyclohexylphenyl) hydrogenated 4,4'-isopropylidenediphenol diphosphite, di(2,4-di-t-butylphenyl) cyclohexyl phosphite, 2,4-di-t-butylphenyl diisodecylphosphite, tris-(butoxyethyoxyethyl) phosphite, di(tridecyl) pentaerythritol diphosphite, di(nonylphenyl) pentaerythritol diphosphite, bis (2,4-di-t-butylphenyl) pentaerythritol diphosphite, hydrogenated 4,4'-isopropylidenediphenol pentaerythritol polyphosphite and tetraphenyl dipropyleneglycol diphosphite.

An amount of hexamethylene tetramine within the range from about 0.01 to about 5 parts by weight, preferably from about 0.1 to about 2 parts by weight, per 100 parts by weight of organic phosphite ester, is effective to improve hydrolytic stability.

The organic phosphite esters of this invention are known stabilizers for synthetic polymers, and can be used in the normal

way, with superior hydrolytic stability due to the hexamethylene tetramine, which does not interfere with the stabilizing effectiveness of the phosphite ester.

Polymer materials whose stability can be improved by the phosphite esters of the invention include olefin polymers such as polyethylene, polypropylene, poly(butene-1), poly(3-methylbutene-1) and copolymers of such olefins, such as copolymers of ethylene, propylene and butene-1 with each other and with other copolymerizable monomers; halogen containing resins such as polyvinyl chloride, polyvinyl bromide, polyvinyl fluoride, polyvinylidene chloride, chlorinated polyethylene, chlorinated polypropylene, chlorinated rubber and copolymers of vinyl chloride with other copolymerizable monomers such as vinyl acetate, ethylene, propylene, styrene, isobutene, vinylidene chloride, maleic anhydride, acrylonitrile, butadiene, isoprene, acrylic esters and maleic esters; polyvinylacetate; polystyrene; polydienes such as polybutadiene and polyisoprene: copolymers of olefins and dienes with other ethylenically unsaturated monomers, such as styrene-butadiene copolymers, acrylonitrile-styrene copolymers, acrylonitrile-butadiene-styrene copolymers; polyacetals, polyvinyl butyral, polymethyl methacrylates, polycarbonates, polyphenyleneoxides, polyesters such as polyethylene terephthalate and polybutylene terephthalate, polyamides such as polycaprolactam and polyhexamethylene adipamide, polyurethanes, and epoxy resins.

With the phosphite esters of the invention the usual light stabilizers for synthetic polymers can be employed, such as 2,2,6,6-tetramethyl piperidyl compounds, hydroxybenzophenones such as 2-hydroxy-4-methoxybenzophenone, 2-hydroxy-4-n-octoxy benzophenone, 2,4-dihydroxybenzophenone, benzotriazoles, such as 2(2-hydroxy-5-methylphenyl) benzotriazoles, 2(2-hydroxy-3-t-butyl-5-methylphenyl)-5-chlorobenzotriazole, 2(2-hydroxy -3-5-di-t-butylphenyl) phenyl)-5-chlorobenzotriazole, 2(2-hydroxy-3-5-di-t-butylphenyl) 5-chlorobenzotriazole, 2(2-hydroxy-3,5-di-t-amylphenyl_ benzotriazole, benzoates such as phenylsalicylate, 2,4-di-t-butylphenyl-3,5-di-t-butyl-4-hydroxy phenylbenzoate, nickel compounds such as nickel-2,2'-thiobis(4-t-octyl-phenolate), nickel-monoethyl (3,5-di-t-butyl-4-hydroxybenzyl) phosphonate, substituted acrylonitriles such as methyl-$\alpha$-cyano-$\beta$ -methyl-$\beta$-(p-methoxy phenyl) acrylate and oxalic anilides such as N-2-ethyl phenyl-N'-2-ethoxy-5-t-butyl phenyl oxalic diamide, N-2-ethyl phenyl-N'-2-ethoxy phenyl oxalic diamide.

A sufficient amount of the phosphite ester or stabilizer combination is used to improve the resistance of the synthetic polymer to deterioration in physical properties when exposed to heat and light, including, for example, discoloration, reduction in melt viscosity and embrittlement. Very small amounts are usually adequate. Amounts within the range from about 0.001 to about 10% total stabilizers including phosphite ester/hexa-methylene tetramine by weight of the polymer are satisfactory.

Preferably, from 0.01 to 5% is employed for optimum stabilization.

The phosphite esters of the invention are readily rendered as stabilizers in solid or liquid form, comprising a blend of:

(a) phosphite ester (with hexamethylene tetramine) in an amount of from about 10 to about 35 parts by weight;

(b) a phenolic antioxidant in an amount from about 10 to about 35 parts by weight; and/or

(c) other heat or light stabilizers in an amount of from about 10 to about 35 parts by weight.

The phosphite esters of the invention can be employed in combination with other conventional heat and light stabilizers and/or phenolic antioxidant according to the requirement of the particular synthetic polymer.

Thus, for example, in the case of polyvinyl chloride resins, other polyvinyl chloride resin heat stabilizers can be included, including polyvalent metal fatty acid salts such as barium and cadmium salts of the higher fatty acids; organotin compounds; and epoxy compounds.

With polyolefin resins there can be employed fatty acid salts of polyvalent metals, and the higher fatty acid esters of thiodipropionic acids, such as, for example, dilauryl thiodipropionate.

With polyamide resin compositions, polyamide stabilizers such as copper salts in combination with iodides and/or other phosphorous compounds and salts of divalent manganese can be used.

With synthetic rubbers and acrylonitrile-butadiene-styrene terpolymers, other antioxidants and polyvalent metal salts of the higher fatty acids can be used.

In addition, other conventional additives for synthetic polymers, such as plasticizers, lubricants, emulsifiers, antistatic agents, flame-proofing agents, pigments and fillers, can be employed.

The stabilizer or combination is incorporated in the polymer in suitable mixing equipment, such as a mill or a Banbury mixer. If the polymer has a melt viscosity which is too high for the desired use, the polymer can be worked until its melt viscosity has been reduced to the desired range before addition of the stabilizer. Mixing is continued until the mixture is substantially uniform. The resulting composition is then removed from the mixing equipment and brought to the size and shape desired for marketing or use.

The stabilized polymer can be worked into the desired shape, such as by milling, calendering, extruding or injection molding or fiber-forming. In such operations, it will be found to have a considerably improved resistance to reduction in melt viscosity during the heating, as well as a better resistance to

discoloration and embrittlement on ageing and heating.

The following Examples illustrate preferred stabilizer systems and resin compositions of the invention:

Examples 1 to 4

100 g of bis (2,4-di-t-butylphenyl) pentaerythritol diphosphite was mixed with the additive shown in Table I, and then ground.

5 g samples were weighed and stored in the open under atmospheric conditions. The samples were weighed periodically, and the percentage increase (owing to water absorption) noted. The results are shown in Table I.

Table I

| Example No. | Additive | Amount (g) | Weight gain (%) 48 hours | 120 hours | 168 hours |
|---|---|---|---|---|---|
| Control 1 | None | - | 9.8 | 13.3 | 14.2 |
| Control 2 | Triisopropanol amine | 1.0 | 3.4 | 12.5 | 14.2 |
| Example 1 | Hexamethylene tetramine | 0.1 | 0.2 | 1.1 | 5.8 |
| Example 2 | Hexamethylene tetramine | 0.3 | 0.1 | 0.5 | 2.1 |
| Example 3 | Hexamethylene tetramine | 0.5 | 0 | 0.2 | 0.8 |
| Example 4 | Hexamethylene tetramine | 1.0 | 0 | 0 | 0 |

It is apparent that the phosphite esters of the Examples absorbed far less water and were therefore far more resistant to hydrolysis than the Controls.

Example 5

100 g of distearyl pentaerythritol diphosphite was mixed with the amounts of additive shown in Table II, and then ground.

5 g samples were weighed and stored in the open under atmospheric conditions. The samples were weighed periodically, and the days required for the percentage increase to reach 5% was noted. The results are shown in Table II.

Table II

| | Additive \ Amount (g) | Days required for weight increase to reach 5% | | | | | | | | | |
|---|---|---|---|---|---|---|---|---|---|---|---|
| | | 0 | 0.01 | 0.05 | 0.1 | 0.3 | 0.5 | 0.8 | 1.0 | 2.0 | 5.0 |
| Control | Triisopropanol amine | 2 | 2 | 2 | 2 | 3 | 3 | 4 | 6 | 7 | 8 |
| Example 5 | Hexamethylene-tetramine | 2 | 3 | 7 | 9 | 12 | 15 | 18 | 21 | 23 | 24 |

The hexamethylene tetramine was far more effective than triisopropanol amine in improving hydrolytic stability of the phosphite ester.

## Examples 6 to 9

100 g of the organic phosphite shown in Table III and hexamethylene tetramine or triisopropanol amine 0.5 g were thoroughly blended. 5 g samples were weighed, and stored in the open under atmospheric conditions for one week, and the percent weight increase determined. The results are shown in Table III.

Table III

| Example No. | Organic Phosphite | Weight increase (%) Hexamethylene tetramine | Triisopropanol-amine |
|---|---|---|---|
| 6 | Tris(2,4-di-t-butylphenyl) phosphite | 0 | 1.5 |
| 7 | Nonylphenyl 4,4'-isopropylidenediphenol pentaerythritol diphosphite | 2 | 6 |
| 8 | Tris(nonylphenyl) phosphite | 3 | 10 |
| 9 | Tetra(tridecyl) 4,4'-isopropylidene-diphenol diphosphite | 1.5 | 4.5 |

In all cases, hydrolytic stability was much greater when hexamethylene tetramine was used, instead of triisopropanolamine.

## Example 10

Polypropylene compositions were prepared using phosphite esters of the invention and having the following formulation:

| Ingredient | Parts by Weight |
|---|---|
| Unstabilized polypropylene | 100 |
| Calcium stearate | 0.05 |
| Pentaerythritol tetrakis(3,5-di-t-butyl-4-hydroxyphenyl) propionate | 0.1 |
| Bis(2,4-di-t-butylphenyl) pentaerythritol diphosphite composition (Table IV) | 0.1 |

The stabilizers were blended with the polymer on a two-roll mill for five minutes at 180°C. The resin composition was then compression-molded at 180°C and 250 kg/cm² for five minutes, to prepare sheets 1 mm in thick. Pieces 10 x 20 mm were cut off from the sheets, and heated at 160°C in a Geer oven to determine resistance to heat deterioration. The yellowness of the sheets after exposure to fluorescent light for 72 hours was measured in a Hunter color difference meter. The results are shown in Table IV.

Table IV

| Example No. | Phosphite Composition | Heat Stability (hrs) | Yellowness (%) |
|---|---|---|---|
| Control 1 | Without amine | 262 | 13.5 |
| 2 | Without amine and stored for 7 days | 240 | 19.3 |
| 3 | With 0.5% of triisopropanolamine | 262 | 16.3 |
| 4 | With 0.5% of triisopropanolamine and stored for 7 days | 246 | 23.5 |
| Example 10 | With 0.5% of hexamethylene tetramine | 262 | 14.1 |
| 11 | With 0.5% of hexamethylene tetramine and stored for 7 days | 262 | 14.5 |

It is apparent that the heat stability imparted by the phosphate is not deleteriously affected by hexamethylene tetramine, and in addition hexamethylene tetramine did not contribute a yellow color, while triisopropanolamine did increase yellowness.

Claims:

1. An organic phosphite ester having improved hydrolytic stability, comprising an organic phosphite ester having a tendency to hydrolyze in the presence of water and an amount of hexamethylene tetramine sufficient to improve resistance to such hydrolysis.

2. An organic phosphite ester according to claim 1 in which the amount of hexamethylene tetramine is within the range from about 0.01 to about 5 parts by weight per 100 parts organic phosphite ester.

3. An organic phosphite ester according to claims 1 or 2 in which the amount of hexamethylene tetramine is within the range from about 0.1 to about 2 parts by weight per 100 parts organic phosphite ester.

4. An organic phosphite ester according to any of claims 1 to 3 in which the organic phosphite ester has the formula

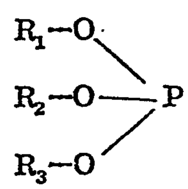

wherein $R_1$, $R_2$ and $R_3$ are organic hydrocarbon radicals, which may be substituted with one or more halogen, hydroxy or oxy ether groups, and have from one to about thirty carbon atoms.

5. An organic phosphite ester according to claim 4, in which $R_1$, $R_2$ and $R_3$ are selected from the group consisting of

alkyl, alkenyl, phenyl, cycloalkyl, cycloalkenyl, phenylalkyl, haloalkyl, haloalkenyl, halophenyl, halocycloalkyl, halophenyl alkyl, hydroxy alkyl, hydroxy phenyl, hydroxy cycloalkyl, alkoxy, phenoxy, and cycloalkoxy.

6. An organic phosphite ester according to any of claims 1 to 3 in which the organic phosphite ester has the formula

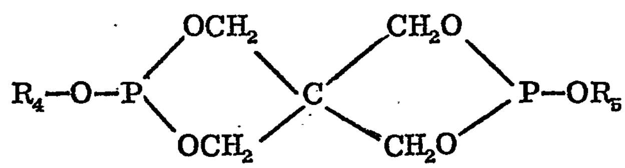

wherein $R_4$ and $R_5$ are organic hydrocarbon radicals, which may be substituted with one or more halogen, hydroxy or oxy ether groups, and have from one to about thirty carbon atoms.

7. An organic phosphite ester according to claim 6 in which $R_4$ and $R_5$ are selected from the group consisting of alkyl, alkenyl, phenyl, cycloalkyl, cycloalkenyl, phenylalkyl, haloalkyl, haloalkenyl, halophenyl, halocycloalkyl, halophenylalkyl, hydroxy, alkyl, hydroxyphenyl, hydroxycycloalkyl, alkoxy, phenoxy, and cycloalkoxy.

8. A polyvinyl chloride resin composition having improved resistance to deterioration when heated comprising a polyvinyl chloride resin formed at least in part of the recurring group

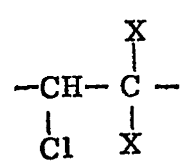

and having a chlorine content in excess of 40%, where X is either hydrogen or chlorine; and an organic phosphite ester in accordance with any of claims 1 to 7.

9. An olefin polymer composition having improved resistance to deterioration when heated comprising an olefin polymer selected from the group consisting of alpha-olefins having from two to six carbon atoms and polystyrene, and an organic phosphite ester in accordance with any of claims 1 to 7.

10. A heat and/or light stabilizer composition for improving the resistance to deterioration of synthetic polymers comprising an organic phosphite ester in accordance with any of claims 1 to 7; and a synthetic polymer heat and/or light stabilizer.

European Patent Office

# EUROPEAN SEARCH REPORT

0168721

Application number

EP 85 10 8301

## DOCUMENTS CONSIDERED TO BE RELEVANT

| Category | Citation of document with indication, where appropriate, of relevant passages | Relevant to claim | CLASSIFICATION OF THE APPLICATION (Int Cl.4) |
|---|---|---|---|
| Y | FR-A-2 453 179 (BORG-WARNER CORP.)<br>* Whole document * | 1-10 | C 07 F 9/141<br>C 07 F 9/15<br>C 08 K 5/52<br>C 08 L 27/06<br>C 08 L 23/02 |
| Y | CHEMICAL ABSTRACTS, vol. 101, no. 10, 3rd September 1984, page 67, no. 74052u, Columbus, Ohio, US; V.A. GLAGOLEV et al.: "Stabilization of chlorine-containing polymers" & KAUCH. REZINA 1984, (6), 11-12<br>* Abstract * | 1,8-10 | |
| Y | FR-A-1 282 812 (MANUFACTURES DE PRODUITS CHIMIQUES DU NORD ETABLISSEMENTS KUHLMANN)<br>* Whole document * | 1-7 | |

TECHNICAL FIELDS SEARCHED (Int. Cl.4)

C 07 F 9/00
C 08 K 5/00

The present search report has been drawn up for all claims

| Place of search | Date of completion of the search | Examiner |
|---|---|---|
| THE HAGUE | 01-10-1985 | BESLIER L.M. |

CATEGORY OF CITED DOCUMENTS

X : particularly relevant if taken alone
Y : particularly relevant if combined with another document of the same category
A : technological background
O : non-written disclosure
P : intermediate document
T : theory or principle underlying the invention
E : earlier patent document, but published on, or after the filing date
D : document cited in the application
L : document cited for other reasons
& : member of the same patent family, corresponding document

EPO Form 1503. 03.82